# DEMANDE DE BREVET EUROPEEN

(11) **EP 2 366 963 A1**
(43) Date de publication de la demande: **21.09.2011**
(21) Numéro de dépôt: 10156760.0
(22) Date de dépôt: 17.03.2010
(51) Int. Cl.: F24J 2/14, F24J 2/18

(54) **Capteur solaire à concentration**

(71) Demandeur: Solarafi S.à.r.l., 6180 Gonderange (LU)
(72) Inventeur: MATTIOLI, Raymond, L-6180, GONDERANGE (LU)
(74) Mandataire: Van Malderen, Joëlle

(57) **Abrégé**

La présente invention se rapporte à un capteur solaire à concentration comprenant une première lame (1) transparente aux rayons solaires, un concentrateur (2) concentrant, en utilisation, les rayons solaires en un foyer, un élément caloporteur (3) disposé au foyer dudit concentrateur (2), au moins une paroi (6) renvoyant, en utilisation, au moins une partie de l'énergie émise par l'élément caloporteur (3) vers ledit élément caloporteur, la paroi (6) étant en contact avec la lame (1) de manière à former une cavité dont l'ouverture est orientée vers le bas.

## Description

### Objet de l'invention

La présente invention se rapporte à un capteur solaire à concentration.

### Etat de la technique

Le principe général de fonctionnement d'un capteur solaire est de capter le rayonnement solaire pour le transformer en chaleur ou en électricité.

Il existe principalement deux types de capteurs, les capteurs plans et les capteurs « à concentration ». Les capteurs plans transforment le rayonnement solaire en chaleur sur toute la surface du capteur sans la concentrer, alors que les capteurs à concentration concentrent le rayonnement solaire au niveau d'un foyer grâce à un réflecteur ou grâce à des moyens optiques agissant par un effet de loupe.

Parmi les capteurs solaires à concentration, on distingue, d'une part, les capteurs utilisant un réflecteur en forme de parabole de révolution. Ces capteurs concentrent les rayons solaires au niveau du foyer de la parabole sur un moteur Stirling, moteur dans lequel la chaleur est transformée en mouvement, un mouvement lui-même transformé en électricité grâce à un alternateur.

On distingue, d'autre part, les capteurs utilisant un réflecteur cylindro-parabolique (prisme à base parabolique) qui concentrent les rayons solaires sur un convertisseur permettant de transformer les rayons solaires en chaleur. Le convertisseur comprend généralement un tube dans lequel circule un fluide caloporteur. Ce fluide va permettre de stocker la chaleur emmagasinée dans un réservoir de stockage ou de la restituer via un échangeur de chaleur.

Le convertisseur doit présenter non seulement une absorption élevée de tout le spectre du rayonnement solaire, mais doit aussi présenter une émissivité, c'est-à-dire une réémission de chaleur, réduite. De plus, dans les capteurs solaires à concentration, la surface du convertisseur est généralement plus petite que celle de l'ouverture du capteur.

De tels capteurs solaires à concentration sont bien connus. Les convertisseurs employés présentent soit une section rectangulaire ou une section circulaire, les réflecteurs peuvent, quant à eux, être hémicylindriques ou cylindro-paraboliques.

Les documents EP 0 033 054, US 3 321 012, et US 4 024 852 décrivent des capteurs solaires dont le convertisseur possède une section rectangulaire. Comme décrit dans le document EP 0 033 054, le réflecteur peut avoir la forme d'une courbe continue composée d'au moins cinq arcs de cercles se raccordant tangentiellement l'un à l'autre, mais il peut aussi avoir une forme hémicylindrique, comme décrit dans le document US 3 321 012, ou bien encore être de forme cylindro-parabolique comme décrit dans le document US 4 024 852.

Les documents US 4 059 094, AT 402 114 et AT 344 375 décrivent des capteurs solaires dont le convertisseur possède une section circulaire. Comme décrit dans les documents AT 402 114 et AT 344 375, le réflecteur peut avoir une forme hémicylindrique, ou bien encore une forme cylindro-parabolique comme décrit dans le document US 4 059094.

Différentes solutions ont été proposées afin d'améliorer l'efficacité des capteurs solaires à concentration. Certaines de ces solutions reposent sur l'emploi de différents matériaux pour la confection des éléments constitutifs d'un capteur et ce afin d'augmenter le rendement du transfert de l'énergie solaire en chaleur.

D'autres solutions, comme cela a été décrit dans les documents AT 344 375 et AT 402 114, proposent de maximiser la quantité de rayonnement solaire reçu par le capteur en employant un « absorbeur », un élément auxiliaire qui fait partie intégrante du convertisseur. Cet absorbeur capte une partie du rayonnement solaire indirect et transfère la chaleur supplémentaire, ainsi absorbée, au fluide caloporteur.

Toutefois, ces solutions procurent un rendement énergétique encore bien trop faible et présentent l'inconvénient de ne pas limiter les pertes thermiques engendrées par un phénomène de réémission de chaleur notamment au niveau du convertisseur.

Le document EP1826505 décrit un capteur solaire à concentration comprenant un transformateur, permettant de convertir le rayonnement solaire diffus en chaleur.

### Buts de l'invention

La présente invention vise à fournir un capteur solaire à concentration qui ne présente pas les inconvénients de l'état de la technique.

Elle vise en particulier à fournir un capteur solaire à concentration présentant une efficacité améliorée.

Elle vise en outre à fournir un capteur solaire qui peut être intégré dans des panneaux solaires.

La présente invention peut par exemple être utilisée pour la production d'électricité, de chauffage, de climatisation ou pour le dessalement de l'eau.

Les expressions « capteur », « cellule », « collecteur » sont utilisées indifféremment dans la suite de l'exposé de l'invention.

### Résumé de l'invention

Un premier aspect de l'invention divulgue un capteur solaire à concentration comprenant :
- une première lame transparente aux rayons solaires,
- un concentrateur concentrant, en utilisation, les rayons solaires en un foyer,
- un élément caloporteur disposé au foyer dudit concentrateur,
- au moins une paroi renvoyant, en utilisation, au moins une partie de l'énergie émise par l'élément caloporteur vers ledit élément caloporteur, la paroi étant en contact avec la lame de manière à former une cavité dont l'ouverture est orientée vers le bas.

Selon des formes particulières de réalisation, le capteur solaire de l'invention comporte l'une ou plusieurs des caractéristiques suivantes :
- la lame transparente s'étend sur l'ensemble de l'ouverture du concentrateur, de manière à former avec le concentrateur un espace intérieur clos,
- le capteur solaire comprend en outre un transformateur recouvert d'une substance à forte émission thermique et étant placé selon un axe ou un plan optique du réflecteur,
- le concentrateur est de forme cylindro-parabolique et le capteur solaire comprend deux parois disposées de part et d'autre de l'élément caloporteur,
- l'élément caloporteur est disposé à l'intérieur d'un tube à vide transparent au rayonnement solaire,
- l'élément caloporteur est disposé à l'intérieur d'un tube transparent au rayonnement solaire et contenant un gaz,
- les parois sont parallèles au plan de symétrie du concentrateur,
- les parois sont placées symétriquement par rapport au plan de symétrie du réflecteur,
- la distance entre les parois et le foyer du concentrateur est inférieure au sixième de la largeur du capteur et supérieure au rayon de l'élément caloporteur,
- la ou les parois sont en matière synthétique transparente au rayonnement solaire ou en verre solaire,
- le capteur comprend une seconde lame transparente et isolante, la seconde lame étant parallèle à la première lame transparente et disposée entre les parois de manière à isoler l'élément caloporteur par rapport à première lame transparente,
- la seconde lame isolante est faite en matière synthétique transparente ou en verre solaire,
- le capteur comprend un cerclage en matériau réfléchissant situé à l'ouverture concentrateur et prolongeant celui-ci, le cerclage étant disposé de manière parallèle au plan de symétrie du concentrateur.

Un second aspect de l'invention concerne un panneau solaire comprenant un assemblage de plusieurs capteurs selon l'une quelconque des revendications précédentes.

De préférence, le panneau solaire de l'invention comprend en outre des moyens de poursuite du soleil.

### Brève description des figures

La figure 1 représente une coupe latérale d'un exemple de réalisation du capteur solaire selon l'invention, dans une position optimale par rapport à la position du soleil.

La figure 2 représente une coupe latérale d'un autre exemple de réalisation du capteur solaire selon l'invention, présentant une lame transparente de dimension réduite.

La figure 3 représente une coupe latérale d'un autre exemple de réalisation du capteur solaire selon l'invention, illustrant un système utilisant un rayonnement solaire indirecte.

La figure 4 représente une coupe latérale d'un autre exemple de réalisation du capteur solaire selon l'invention, illustrant un système utilisant un rayonnement solaire indirecte, ce capteur présentant en outre un convertisseur 5.

### Description détaillée de l'invention

Dans le capteur solaire à concentration selon l'invention, le rayonnement solaire est concentré sur un élément caloporteur 3 par l'intermédiaire d'un réflecteur ou concentrateur 2.

Le rayonnement solaire reçu par l'élément caloporteur 3 est absorbé par celui-ci. Toutefois une partie de cette énergie absorbée peut être réémise par rayonnement thermique et/ou perdue par convection.

L'originalité de la présente invention repose sur l'emploi de parois 6 et d'une lame transparente au rayonnement solaire 1, définissant une cavité permettant de piéger l'air chauffé par l'élément caloporteur, réduisant ainsi les pertes thermiques par convection. Les parois 6 permettent en outre de renvoyer (réfléchir) le rayonnement thermique émis par l'élément caloporteur vers celui-ci.

On entend par rayonnement thermique, l'énergie émise lors du phénomène naturel appelé émissivité thermique, un phénomène durant lequel toute matière à une température donnée émet un rayonnement électromagnétique. Aux températures couramment utilisées dans les applications visées par la présente invention, ce rayonnement est principalement situé dans l'infrarouge.

Par transparent au rayonnement solaire, nous entendons une transmission de l'énergie solaire déterminée selon L'ISO 9050 AM 1.5 supérieure à 80%.

De préférence, dans le capteur selon l'invention, la lame transparente 1 s'étend sur l'ensemble de l'ouverture du concentrateur 2, de façon à former avec celui-ci un espace clos, isolé de l'environnement externe.

Avantageusement un transformateur 5 peut permettre d'améliorer le rendement thermique du capteur selon l'invention. Un tel transformateur et ses avantages sont décrits dans le document EP1826505.

De préférence, les parois 6 sont parallèles au rayonnement solaire incident 9, de manière à produire un minimum d'absorption ou de réflexion de ce rayonnement (ombre portée minimum). Pour un alignement adéquat du réflecteur, cela correspond à avoir des parois 6 parallèles à l'axe optique ou au plan optique du réflecteur.

Pour un capteur comprenant un réflecteur (concentrateur) parabolique (paraboloïde de révolution), comprenant un élément caloporteur à son foyer et orienté vers le soleil, cela correspondrait à une paroi cylindrique disposée autour du caloporteur, parallèlement à l'axe de symétrie de la parabole.

Pour un capteur comprenant un réflecteur cylindro-parabolique 2 (prisme à base parabolique), et un élément caloporteur 3 linéaire, les parois 6 seront de préférence disposées symétriquement autour du caloporteur 3 et parallèlement au plan de symétrie du réflecteur 2. Pour des raisons de simplicité de réalisation des capteurs, cette forme cylindro-parabolique est préférée.

De préférence, les parois 6 sont transparentes dans le spectre visible, de manière à laisser passer la lumière diffuse du rayonnement solaire, et la lumière concentrée par le réflecteur. Ces parois sont par exemple en matériau synthétiques transparents ou en verre solaire.

On entend par « verre solaire » un verre qui possède une faible teneur en fer et dont la surface est traitée de façon à réduire les effets de réflexion. Le traitement de surface peut être obtenu par traitement PVD, ionique ou par traitement chimique par application de nanoparticules de dioxyde de silicone ou par application d'une couche ou d'un film de polytetrafluoroéthylène (PTFE ou Teflon™).

Alternativement, les parois 6 présentent une réflexion totale tant dans l'infrarouge que dans le visible (miroir). Dans ce cas, avantageusement, la face de la paroi orientée vers l'élément caloporteur présente une absorption (corps noir) maximale, tandis que l'autre face présente au contraire une réflexion maximale. Cet effet pourra par exemple être obtenu en utilisant un verre multicouche comprenant un verre solaire sur lequel une couche absorbante est déposée (noir de carbone, oxyde de chrome,...), suivie d'une couche réfléchissante (Al, Au, Ag,...).

Avantageusement, les parois 6 sont en contact avec la lame transparente 1 de manière à piéger l'air chaud à proximité de l'élément caloporteur 3 et à inhiber les déplacements de gaz par convection. Pour cette raison, les réflecteurs cylindro-paraboliques sont de préférence disposés horizontalement, l'inclinaison du plan de symétrie du réflecteur permettant d'adapter le capteur à la hauteur du soleil selon la latitude et éventuellement le moment de la journée en cas d'utilisation de dispositif de poursuite.

De préférence, l'élément caloporteur est isolé dans un tube transparent 4, définissant un espace 10 entre le tube transparent 4 et l'élément caloporteur 3. Cet espace est de préférence maintenu à basse pression (vide).

Alternativement, l'espace 10 entre le tube transparent 4 et l'élément caloporteur est rempli d'un gaz isolant ou d'air, par exemple à pression atmosphérique.

Le tube transparent 4 est fait d'un verre solaire ou d'un verre borosilicaté. Le tube transparent 4 peut être recouvert d'une couche présentant une texture ou faite d'une substance ayant des propriétés anti-réflexion.

De préférence, les parois 6 sont équidistantes du foyer de la parabole et leur distance au foyer est de préférence inférieure à 1/6 de la largeur du capteur. Par ailleurs, ces parois 6 ne sont pas en contact ni avec le tube transparent 4 ni avec le tube caloporteur 4. Cette disposition permet d'éviter les pertes thermique par conduction depuis le caloporteur 3 (ou le tube transparent 4) vers les parois 6 sans toutefois augmenter de manière exagérée le volume d'air chaud piégé par ces parois 6.

Avantageusement, la hauteur de ces deux parois 6 est dimensionnée de façon à ce que la cavité formée par les deux parois 6 et la lame transparente 1 comprenne complètement le tube caloporteur 3 et le cas échéant le tube isolant transparent 4. De préférence cette hauteur est égale à la distance du foyer par rapport à la lame transparente 1, augmentée de 15%.

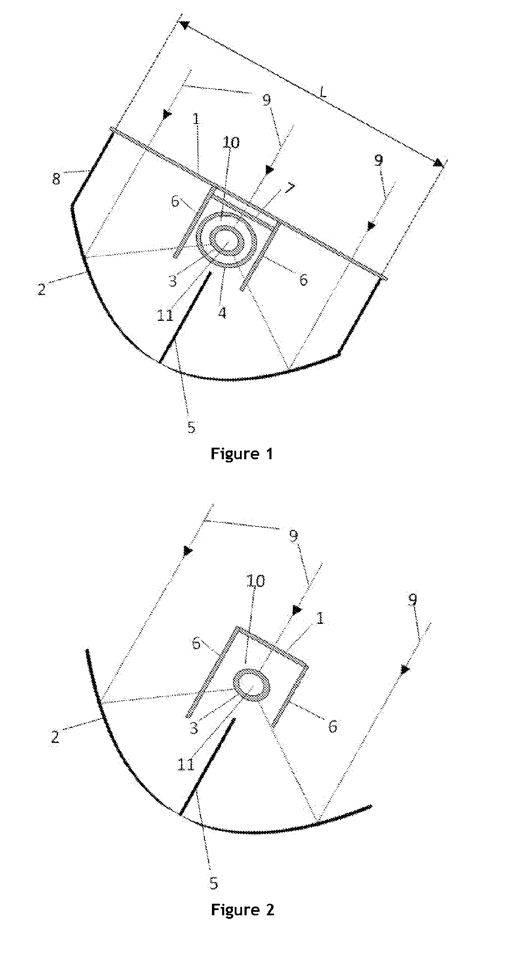

Avantageusement, la hauteur des parois 6 est adaptée à l'inclinaison du capteur, tel que représenté à la figure 2, de manière à ce que les extrémités des parois 6 soient situées dans un plan horizontal, ce plan horizontal étant plus bas que l'élément caloporteur. De cette manière, l'espace délimité les parois 6 et la lame 1 permet un confinement optimal de l'air chaud.

L'isolation thermique de la lame transparente peut-être renforcée par la pose d'une seconde lame isolante transparente 7, positionnée contre la lame transparente 1 ou à proximité de celle-ci et disposée entre les deux parois 6, auquel cas la hauteur des parois 6 est augmentée de l'épaisseur de cette lame isolante 7.

Lorsque la lame transparente 1 ferme la totalité de l'ouverture du concentrateur tel que représenté à la figure1, l'efficacité de la présente invention sera améliorée lorsque le foyer se rapproche de la lame transparente 1 pour les systèmes exposés de manière directe au soleil (ouverture du concentrateur orientée vers le haut).

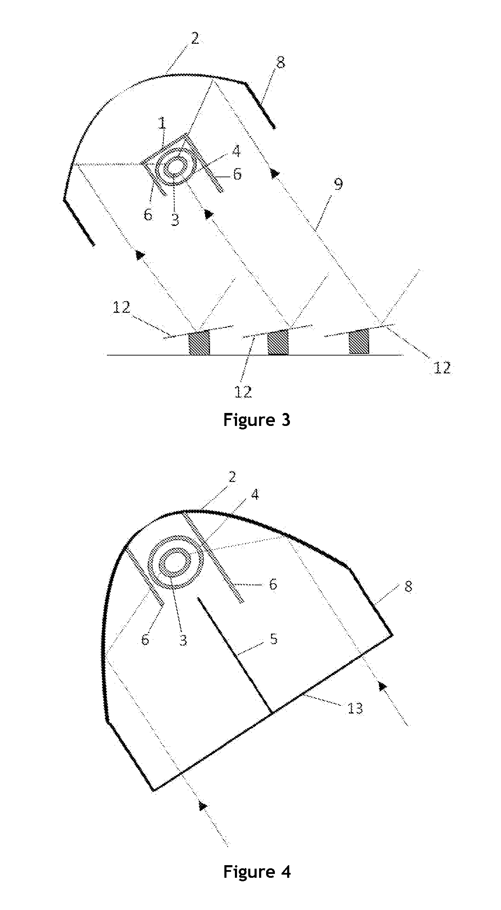

Pour les systèmes présentant un captage indirect des rayons solaires, tel que représentés aux figures 3 et 4, le foyer se rapproche de préférence du réflecteur, de manière à placer l'élément caloporteur en position haute, soit à l'endroit où le confinement procuré par les parois 6 et la lame transparente 1 induit la température la plus élevée. Dans ce cas, la fonction de la lame transparente pourra éventuellement être reprise par le fond du réflecteur, tel que représenté à la figure 4.

Pour augmenter l'efficacité globale, diminuer les pertes par réflexion et absorption des rayons en direction du foyer par les deux parois 6, et pour rapprocher les parois 6 du foyer, il est préférable de rehausser la lame transparente 1 par rapport au réflecteur 2 par l'intermédiaire d'un cerclage réfléchissant 8. Le rehaussement a en outre l'avantage de permettre une absorption améliorée du rayonnement diffus par le transformateur 5.

La hauteur du cerclage 8 (rehaussement) est de préférence supérieure à la hauteur des parois 6 sans toutefois excéder la largeur du capteur (largeur de l'ouverture de la section droite du prisme dans le cas du capteur cylindro-parabolique). Avantageusement, cette disposition garantit l'intégration complète du caloporteur et le cas échéant du tube transparent et des parois 6 dans l'espace compris dans le cerclage 8.

La hauteur du cerclage 8 sera minimisée lorsque le capteur sera disposé de manière fixe (en absence de dispositifs de poursuite) afin de limiter les effets d'ombrages dû au désalignement du concentrateur par rapport au soleil.

La présente invention ne se limite pas aux concentrateurs linéaires (cylindro-paraboliques) mais elle est également efficace sur des concentrateurs paraboliques (paraboloïdes de révolution).

De préférence, la première lame transparente 1, et la seconde lame isolante 7 sont constitués de tout matériau synthétique transparent adéquat ou de verre solaire.

Avantageusement, la surface intérieure de la couverture 1 et/ou de la lame isolante peut être recouverte d'une substance réfléchissant les rayons infrarouges.

Le réflecteur 2 possède une surface hautement réfléchissante. De préférence, il présente l'aspect d'un miroir. Dans ce but, le réflecteur 2 peut être fait d'un matériau rigide, du verre par exemple, sur lequel est appliqué une couche d'une substance réfléchissante (Al, Ag,... déposé par exemple par évaporation ou pulvérisation plasma).

Alternativement, le réflecteur 2 peut-être en aluminium ayant subi un traitement de surface (PVD ou autre) pour augmenter ses propriétés optiques de réflexion.

L'élément caloporteur 3 dans lequel circule un fluide caloporteur 11 se présente sous la forme d'un tuyau de section quelconque. Il sera de préférence de section rectangulaire. Il peut s'agir d'un tube en métal ou en matière plastique résistant aux températures de fonctionnement du capteur solaire. De préférence, ledit élément caloporteur est en cuivre ou en aluminium.

De préférence, la surface de l'élément caloporteur 3 est recouverte, entièrement ou partiellement, d'une couche d'une matière à forte absorption du spectre solaire et à faible émission thermique. Toutefois, dans le cas d'un recouvrement partiel dudit élément caloporteur 3, la substance à forte absorption du spectre solaire et à faible émission thermique devra recouvrir la surface de l'élément caloporteur 3 orientée vers le réflecteur.

L'élément caloporteur 3 contient un fluide caloporteur 11. Dans une forme de réalisation particulière, le fluide caloporteur 11 peut être de l'air. Dans une seconde forme de réalisation, le fluide caloporteur 11 peut être de l'eau, avec ou sans additif. Dans une autre forme de réalisation, pour des températures de fonctionnement de plus de 100°C, le fluide caloporteur 11 peut être une huile stable, qui ne se dégrade pas, à hautes températures.

De préférence, l'élément caloporteur 3 possède les caractéristiques d'un caloduc, encore appelé « heatpipe ». Un caloduc est un tube creux contenant un fluide caloporteur qui est choisi en fonction de sa température de condensation/vaporisation. Dans un tel caloduc, la chaleur générée au niveau du capteur vaporise le fluide caloporteur, la vapeur générée remonte alors le tube vers une zone de condensation où le fluide caloporteur se condense, libérant ainsi sa chaleur latente de condensation. Cette chaleur latente de condensation est ensuite transférée à un second fluide caloporteur par conduction. Un exemple d'un tel caloduc est décrit dans le document GB2448239.

Parmi les avantages apportés par l'invention, notons que l'utilisation des parois 6 permet d'obtenir de bons rendements de conversion thermique même sans l'utilisation de tube 4 sous vide, ce qui représente un avantage en terme de coût d'une part, mais aussi en terme de maintenance, un accès simple à l'élément caloporteur pouvant être maintenu.

On notera aussi que même en cas d'utilisation de tube 4 sous vide ou comprenant un gaz isolant à pression atmosphérique, l'invention permet d'améliorer le rendement des capteurs solaires à concentration.

De préférence, le capteur solaire de la présente invention comprend des moyens de poursuite du soleil de manière à maintenir les rayons solaires 9 parallèles au plan (ou à l'axe) optique du réflecteur, afin de concentrer ces rayons sur l'élément caloporteur.

Les capteurs solaires de l'invention peuvent par exemple être utilisés dans le cadre de production de chaleur pour des applications de chauffage, de production d'électricité ou de désalinisation de l'eau.

Les capteurs solaires de l'invention peuvent être utilisés de manière individuelle ou être assemblés dans des panneaux solaires.

### Légende des figures

- 1.: Première lame transparente
- 2.: Concentrateur
- 3.: Elément caloporteur
- 4.: Tube transparent
- 5.: Transformateur
- 6.: Parois
- 7.: Seconde lame transparente
- 8.: Cerclage réfléchissant
- 9.: Rayons solaires
- 10.: Espace entre l'élément caloporteur et le tube transparent
- 11.: Fluide caloporteur
- 12.: Réflecteur primaire
- 13.: Couverture isolante

## Revendications

1. Capteur solaire à concentration comprenant :
- une première lame (1) transparente aux rayons solaires,
- un concentrateur (2) concentrant, en utilisation, les rayons solaires en un foyer,
- un élément caloporteur (3) disposé au foyer dudit concentrateur (2),
- au moins une paroi (6) renvoyant, en utilisation, au moins une partie de l'énergie émise par l'élément caloporteur (3) vers ledit élément caloporteur, la paroi (6) étant en contact avec la lame (1) de manière à former une cavité dont l'ouverture est orientée vers le bas.

2. Capteur solaire selon la revendication 1 dans lequel la lame (1) s'étend sur l'ensemble de l'ouverture du concentrateur, de manière à former avec le concentrateur un espace intérieur clos.

3. Capteur solaire selon les revendications 1 ou 2 comprenant en outre un transformateur (5) recouvert d'une substance à forte émission thermique et étant placé selon un axe ou un plan optique du réflecteur.

4. Capteur solaire selon l'une quelconque des revendications précédentes dans lequel le concentrateur (2) est de forme cylindro-parabolique et le capteur solaire comprend deux parois (6) disposées de part et d'autre de l'élément caloporteur (3).

5. Capteur solaire à concentration selon la revendication 4 dans lequel l'élément caloporteur (3) est disposé à l'intérieur d'un tube à vide (4) transparent au rayonnement solaire.

6. Capteur solaire à concentration selon la revendication 4 dans lequel l'élément caloporteur (3) est disposé à l'intérieur d'un tube (4) transparent au rayonnement solaire et contenant un gaz.

7. Capteur solaire à concentration selon l'une quelconque des revendications 4 à 6 dans lequel les parois (6) sont parallèles au plan de symétrie du concentrateur (2).

8. Capteur solaire à concentration selon la revendication 7 dans lequel les parois (6) sont placées symétriquement par rapport au plan de symétrie du réflecteur.

9. Capteur solaire selon la revendication 8 dans lequel la distance entre les parois (6) et le foyer du concentrateur est inférieure au sixième de la largeur (L) du capteur et supérieure au rayon de l'élément caloporteur (3).

10. Capteur solaire à concentration selon l'une quelconque des revendications précédentes dans lequel la ou les parois (6) sont en matière synthétique transparente au rayonnement solaire ou en verre solaire.

11. Capteur solaire à concentration selon l'une quelconque des revendications précédentes dans lequel ledit capteur comprend une seconde lame transparente et isolante (7), la seconde lame étant parallèle à la première lame transparente (1) et disposée entre les parois (6) de manière à isoler l'élément caloporteur (3) par rapport à première lame transparente (1).

12. Capteur solaire à concentration selon la revendication 11 dans lequel la seconde lame isolante (7) est faite en matière synthétique transparente ou en verre solaire.

13. Capteur solaire à concentration selon l'une quelconque des revendications précédentes dans lequel ledit capteur comprend un cerclage (8) en matériau réfléchissant situé à l'ouverture concentrateur (2) et prolongeant celui-ci, le cerclage (8) étant disposé de manière parallèle au plan de symétrie du concentrateur (2).

14. Panneau solaire comprenant un assemblage de plusieurs capteurs selon l'une quelconque des revendications précédentes.

15. Panneau solaire selon la revendication 14 comprenant en outre des moyens de poursuite du soleil.
